Europäisches Patentamt

(19) European Patent Office

Office européen des brevets

(11) Publication number: **0 212 826**
**B1**

(12) # EUROPEAN PATENT SPECIFICATION

(45) Date of publication of patent specification :
23.11.89

(21) Application number : 86305303.9

(22) Date of filing : 10.07.86

(51) Int. Cl.⁴ : **G 01 L 5/06, F 16 G 11/12**

(54) Load setting and shock absorbing devices for tensionable lines.

(30) Priority : 17.07.85 GB 8518007

(43) Date of publication of application :
04.03.87 Bulletin 87/10

(45) Publication of the grant of the patent :
23.11.89 Bulletin 89/47

(84) Designated contracting states :
DE FR GB IT

(56) References cited :
DE—A— 2 855 989
DE—A— 3 244 189
GB—A— 1 452 705
US—A— 2 570 321
US—A— 3 033 154
US—A— 3 918 301
US—A— 4 432 246

(73) Proprietor : LATCHWAYS LIMITED
3 St. Mary Street
Chippenham Wiltshire, SN15 3JL (GB)

(72) Inventor : Tupper, Alan William
Leigh Delamere House Leigh Delamere
Chippenham Wiltshire, SN14 6JZ (GB)

(74) Representative : Ben-Nathan, Laurence Albert et al
Urquhart-Dykes & Lord 91 Wimpole Street
London W1M 8AH (GB)

## Description

### Field and background of the invention

This invention relates to load setting and shock absorbing devices, and is concerned with such devices for setting predetermined tension loads applied to tensionable elongate elements, such as wire or rope lines. The invention also relates to devices for absorbing shock loads applied in use to such tensioned elongate elements.

There are many applications where it would be desirable to have an immediate indication of when a preselected tension loading is applied to a line during an initial tensioning thereof, in order to prevent overtensioning of the line, for example to show when a certain tension loading applied to a rigging line of a yacht is reached, or to indicate when a specified tension load is applied in a fixed ended safety support line, to which a person working at a height on a building can be attached, so that overloading of the end fixings of the line attached to the building or other fixed support structure does not occur during installation of the safety line. In the latter case, it is also desirable to provide a means for absorbing shock loads applied to the pretensioned safety line to restrain the fall of a person secured to the safety line.

U.S. Patents Nos. 3 918 301 and 3 033 154 disclose devices adapted to give a warning of when a predetermined tension is reached or exceeded in structures having parts which are relatively movable when subjected to loading. These devices include a stack or stacks of disc washers which act between relatively movable elements of the device and means actuated by a predetermined amount of relative movement of those elements to signal the occurrence thereof. These devices however are only adapted to function in the systems in which they are located, to provide an indication of when an overload condition occurs during operation of the system.

British Patent Specification No. 2 130 737 discloses a device for indicating when an unacceptable reduction occurs in the tension of a clamping device, e. g. a vehicle wheel nut, and utilizes a flag member which is released to move under gravity or centrifugal forces to an indicating position when an unacceptable reduction in tension occurs.

### Summary of the invention

An object of the invention is to provide a device, and a system incorporating a device, which is adapted to facilitate the presetting of an initial tension load in the system and preferably also thereafter to accommodate shock loads applied to the system.

The invention provides a shock absorber adapted to indicate when an initial acceptable tension specified for the installation of a safety line is reached, so that end attachments thereof to a fixed structure are not overloaded, comprising two relatively movable parts, resilient means acting between the relatively moving parts to oppose relative movement thereof in a direction to effect axial expansion of the shock absorber when a tension loading is applied thereto by said safety line, adjustable setting means for applying an initial degree of compression loading to the resilient means for presetting the tension load required to be applied to the shock absorber to effect relative movement of said two relatively moving parts in said direction, and indicator means responsive to said relative movement of the two relatively moving parts to provide an indication of when said initial acceptable installation tension loading has been applied to the safety line, the shock absorber being adapted to allow a predetermined amount of relative movement of said resilient means after said indicator means have been actuated, and said resilient means being adapted to provide a progressively increasing resistance to said relative movement of the two relatively moving parts to absorb shock loads applied in use to said safety line.

Said device may include a plurality of pairs of relatively movable parts having respectively resilient means, setting means and indicator means as aforesaid whereby the setting means can be adjusted such that the respective indicator means are actuated at different values of applied tension loading. Similarly, two or more separate devices according to the invention preset to different actuating tension loadings, can be used in series to provide, for example, indications of a lower limit and an upper limit of an acceptable loading range.

In some arrangements according to the invention, two sets of said relatively movable parts may be provided and one part of each set may be provided by discrete portions of a body member of the device. The body member may be elongate with one relatively movable part slidably engaged with each opposite end portion of the body member. Said one relatively movable part at each end of the body member may comprise a tubular first member slidably, but non-rotatably, mounted with respect to the body member, and a second member screw-threadably received within the first member, the screw threads of the pairs of first and second members at respective ends of the body member being of the opposite hand.

The resilient means preferably comprise one or more disc springs which have predetermined load/deflection characteristics. It would be possible to use other types of spring for the resilient means but disc springs are likely to be more convenient for many applications.

The presetting means may comprise an abutment on each of said two relatively movable parts between which the resilient means act, and a manually adjustable element on one of the parts for moving that part relative to the other part to apply a selected degree of compression loading to the resilient means as aforesaid. In other arrangements, the presetting means may comprise an abutment on each of said parts between which the resilient means act, the abutment on one part being provided by a movable element on that part, the position of the element being adjustable to allow the setting of a required amount of initial compression of the resilient means. Said element may be a screw-threaded element, e. g. a nut, located on a screw-threaded portion of the part with which it is associated.

The indicator means, which is normally responsive to commencement of said relative movement of said parts, may take various different forms. For example, it may comprise an element gripped between opposed portions of said parts until the tension load applied to the device reaches the pre-set tension load of the device, when the element is then released to indicate that the pre-set tension load has been reached.

The invention also provides a turnbuckle incorporating tension load indicating means, comprising an elongate, tubular body member, and, at each end thereof, a tubular first member slidably, but non-rotatably, mounted on the body member, a second member screw-threadably received within said first member, resilient means acting between said first member and the tubular body member to oppose relative movement thereof in one direction when a tension loading is applied across the turnbuckle, adjustable setting means for applying an initial selected degree of compression loading to the resilient means for pre-setting the tension load required to be applied to the turnbuckle to effect relative movement of said tubular first member and said tubular body member in said one direction, and indicator means responsive to said relative movement of said tubular first member and said tubular body member to provide an indication of when tension loading applied to the turnbuckle, in use, reaches said preset tension load, wherein the screw-threads of the pairs of said tubular first member and second member at respective opposite ends of the tubular body member are of the opposite hand whereby tensioning of a line associated with the turnbuckle can be achieved by rotating said tubular body member about its longitudinal axis.

Brief description of the Drawings

Embodiments of the invention will now be described by way of example, and with reference to the accompanying drawings, in which :

Figures 1 and 2 are plan views of a shock absorber embodying the invention showing respectively a pre-set condition and a fully loaded condition thereof ;

Figure 3 is a diagrammatic plan view of the shock absorber of Figs. 1 and 2 located in a safety line system ;

Figures 4 and 5 are plan views of two alternative types of indicator element, ;

Figure 6 is an end view of an overload tag for use in the shock absorber of Figs. 1 and 2 ;

Figure 7 is a cross-section through the shock absorber with the tag of Fig. 6 disposed therein ;

Figure 8 is a cross-section along line A-A in Fig. 7.

Figures 9 and 10 are, respectively, a side view and a vertical section through a further embodiment ; and,

Figure 11 is a vertical section through a yet further embodiment.

Detailed description

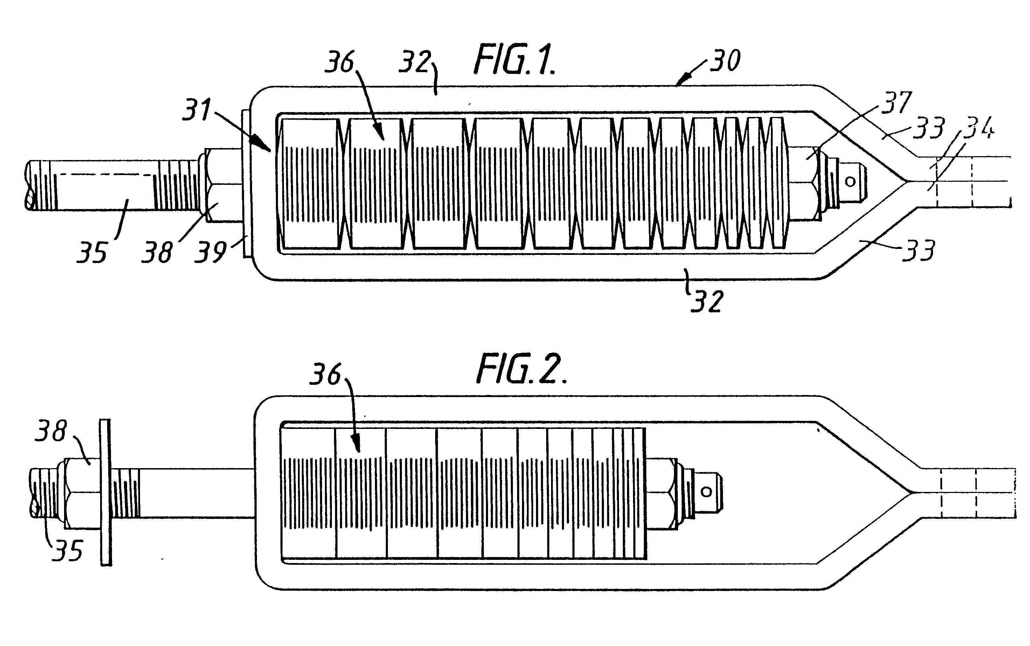

Figures 1 and 2 of the drawings illustrate an embodiment of the invention in the form of a shock absorber. The device can be used for example in a safety line system which could be installed at a height on a building and to which workmen can attach themselves by means of lanyards which can be hooked onto the safety line. During installation of the safety line, it is desirable that the tension therein is not excessive so that undue strain is not applied to the wall fixing devices which secure the line. The device shown in Figures 1 and 2 not only provides a very convenient means of indicating when the predetermined safe installation tensioning of the wire has been reached but also provides a shock absorber for absorbing shock loads applied to the safety line when for example it is required to take the strain applied by the full weight of a workman.

The device comprises an elongate generally U-shaped frame 30 having a base part 31 and a pair of arms 32, the free ends of which converge at 33 forming a pair of abutting flanges 34 having aligned apertures therein providing an attachment for the end of a safety line. The movable element 35 is in the form of a threaded rod which passes through the base 31 of the frame and extends between the arms 32 thereof. A stack of disc springs 36 is located on a portion of the rod lying between the arms 32 of the frame and a retaining nut 37 is provided on the threaded rod 35 to act on one end of the stack of the washers 36. A presetting nut 38 is provided on the portion of the rod 35 projecting from the frame 30 and an indicator element 39 is located between the nut 38 and the base 31 of the frame 30.

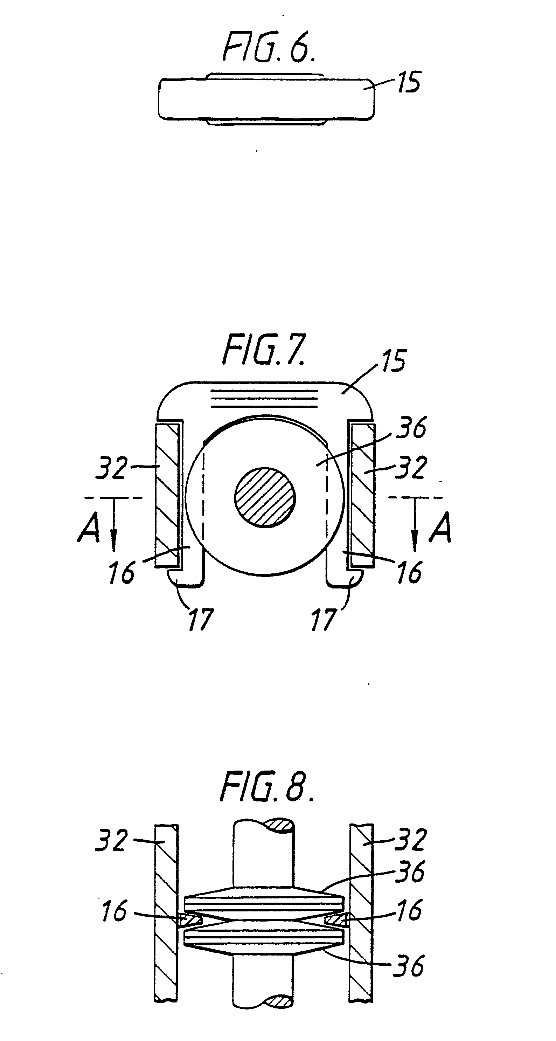

The indicator member 39 may have various different forms. It could be in the form of a simple washer. Figures 4 and 5 illustrate two other possible forms of the indicator member. In Figure 4, the indicator member 39 is in the form of a handwheel having a central aperture for receiving the threaded shank 13 and four projecting equiangularly spaced lobes 21. Figure 5 shows another possible form of indicator member 19 which in this case is a flag 22 having an aperture 23 for locating the flag on the threaded shank 13.

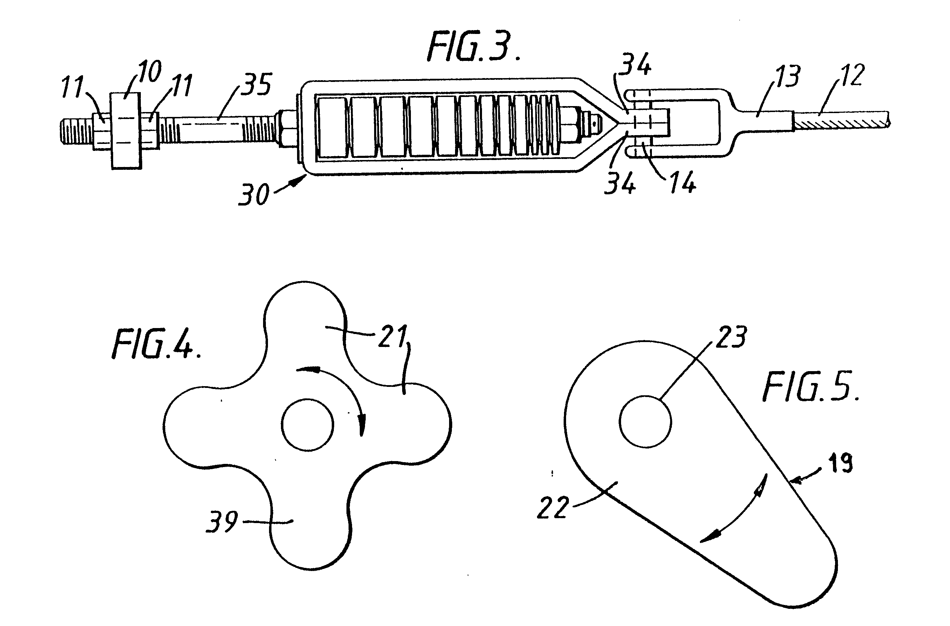

As shown in Figure 3, the thread rod 35 is passed through an aperture in a fixed support 10 and secured therein by lock nuts 11. The safety wire 12 has a clevis device 13 secured at one end, which is fastened to the frame 30 by a pin 14 which passes through aligned apertures in the arms of the clevis and in the abutting flanges 34 of the frame 30. The clevis provides an entry device for engagement with the safety line 12 of an end connector of a lanyard of a safety harness, the end connector being in the form of a load transfer device of the type described in British Patent No. 1 582 201 or U. S. Patent No. 4 265 179, the disclosures of which are incorporated herein by reference. The use of such a load transfer device allows the lanyard end connector to pass any intermediate support points of the safety wire without being detached therefrom.

The nut 38 is adjusted so as to provide a specific axial pre-compression of the stack of disc springs which is equivalent to the required tension loading applied across the device which will result in freeing of the indicator member 39 initially firmly gripped between the nut 38 and the frame 30. This amount of pre-compression can be readily calculated from the known load-extension characteristics of the stack of disc springs. In this way during installation of the safety line and during its initial tensioning, the shock absorber device gives a convenient indication when the specified installation tension is reached so that overtensioning should not occur. Figure 1 illustrates the preset condition of the device with the indicator member 39 no longer firmly gripped between the nut 38 and the base of the frame 30. Under further loading conditions as illustrated in Figure 2, there is a progressive axial movement of the rod 35 against the action of the disc springs 36 as the load increases whereby shock loads applied to the safety line can be absorbed by the device. The number of, and indeed arrangement of, the disc washers are specifically selected to provide a progressive increase in the overall axial extension of the device as the applied load increases from the initial preset condition shown in Figure 1 so as to accommodate shock loading applied to the device in use after installation of the safety line system and the initial tensioning thereof. For example an initial preset load condition of the device could be equivalent to 115 kilograms and the device could allow a progressive extension of the device as the load increases up to 2 050 kilograms which would then be equivalent to the maximum possible extension of the device as illustrated in Figure 2.

Figures 6 to 8 illustrate a plastically deformable, polycarbonate tag 15 having a pair of legs 16 which can be engaged between a pair of adjacent disc washers 36 of the shock absorber. The legs have detent projections 17 at their free ends to retain them in the frame of the shock absorber. When a shock load occurs and the stack of disc washers is compressed the material of the tag 15 plastically extends under predetermined loads to give a permanent indication of a shock load of a particular magnitude having been applied.

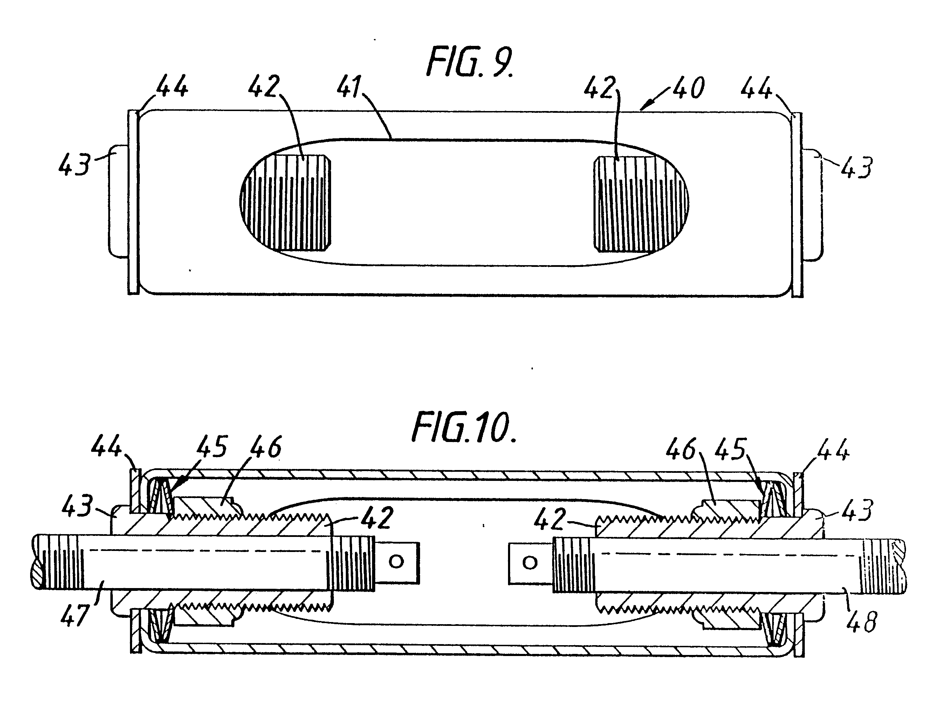

Figures 9 and 10 illustrate a further embodiment in the form of a turnbuckle device for incorporation in a rigging line of a yacht to indicate the low limit and high limit of an acceptable range of tensioning thereof. The device comprises a tubular body member 40 having elongate cut-out portions 41 in opposite sides thereof. The device comprises a pair of load indicating means, one at each end of the tubular body 40, each load indicating means comprising an internally threaded sleeve 42 which extends through an aperture in a respective end wall of the body 40, the threads of the two sleeves 42 being of the opposite hand.

Each sleeve has an annular end flange 43 which grips an indicator member 44 in the pre-set loaded condition of the indicator means. The indicator member 44 may be in the form illustrated in Figure 4 or in Figure 5. The sleeves 42 are radially keyed in their respective apertures in the end walls of the body 40 to prevent rotation of the sleeve with respect to the body. A pair of disc springs 45 is provided on the outer periphery of each sleeve 42 within the tubular body and a pre-set tensioning nut 46 is provided on a screw threaded outer peripheral portion of the sleeve 42 to effect a required degree of pre-compression of the stacked disc springs 45 in order to set the load required to actuate the respective indicator means.

Threaded terminals 47 and 48 of the rigging lines are screwed into the respective sleeves 42. The rigging line is then tensioned by manually rotating the body member 40 until the device indicates that the tension loading is within an acceptable range.

The load indicating means at one end of the tubular body 40 is pre-set so that it is actuated at the lower limit of an acceptable tension range for the rigging line, for example 1000 kilograms while the load indicating means at the other end of the tubular body is pre-set so that it is actuated at an upper limit of such a range, for example 1200 kilograms. In this way the rigging line can be tensioned until the lower limit value is indicated by the indicator means set to that value while the other indicator means will only be actuated when the load exceeds the upper limit of the acceptable range of tension in the rigging line.

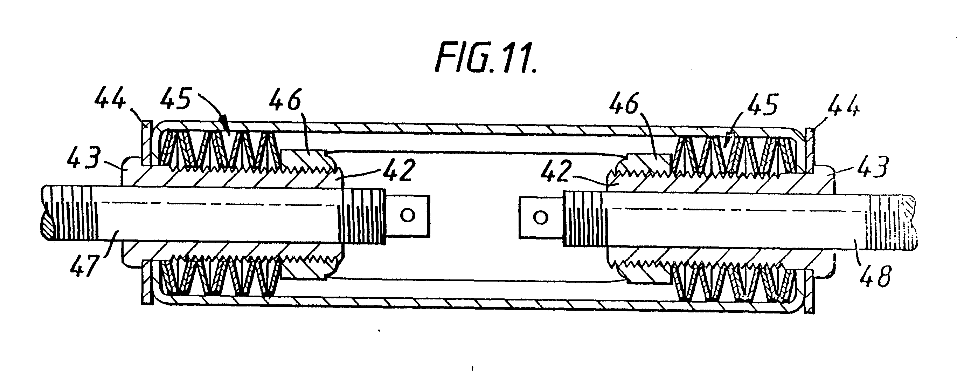

A turnbuckle device as shown in Figures 9 and 10 can also be used in a safety line system as illustrated in Figure 3, in order to facilitate presetting of the initial tension of the line and thereafter to accommodate shock loads applied to the safety line. In such an arrangement the stack of disc washers 45 at each end of the device will be selected to give the required indication of an acceptable pretension loading applied to the safety line and also to give a progressive further axial extension of the device as the loading thereon increases in order to accommodate the aforesaid shock loads that may be applied to the safety line in use. This arrangement is illustrated in Figure 11.

**Claims**

1. A shock absorber adapted to indicate when an initial acceptable tension specified for the installation of a safety line, is reached so that end attachments thereof to a fixed structure are not overloaded, comprising two relatively moving parts (30, 35), resilient means (36, 45) acting between the relatively moving parts to oppose relative movement thereof in a direction to effect axial expansion of the shock absorber when a tension loading is applied thereto by said safety line, adjustable setting means (38 ; 46, 42, 43) for applying an initial degree of compression loading to the resilient means (36, 45) for presetting the tension load required to be applied to the shock absorber to effect relative movement of said two relatively moving parts (30, 35) in said direction, and indicator means (39 ; 19, 44) responsive to said relative movement of the two relatively moving parts (30, 35) to provide an indication of when said initial acceptable tension has been applied to the safety line, the shock absorber being adapted to allow a predetermined amount of relative movement of said resilient means (36, 45) after said indicator means have been actuated, and said resilient means (36, 45) being adapted to provide a progressively increasing resistance to said relative movement of the two relatively moving parts (30, 35) to absorb shock loads applied in use of said safety line.

2. A shock absorber according to Claim 1 wherein the resilient means comprise one or more disc springs which have predetermined load/deflection characteristics.

3. A shock absorber according to Claim 1 wherein the presetting means comprise an abutment on each of said two relatively movable parts between which the resilient 30 means act, and a manually adjustable element on one of the parts for moving that part relative to the other part to apply a selected degree of compression loading to the resilient means as aforesaid.

4. A shock absorber according to Claim 1 wherein the presetting means comprise an abutment on each of said two relatively movable parts between which the resilient means act, the abutment on one part being provided by a movable element on that part, the position of the element being adjustable to allow the setting of a required amount of initial compression of the resilient means.

5. A shock absorber according to Claim 3 wherein said element is a screw-threaded element located on a screw-threaded portion of the part with which it is associated.

6. A shock absorber according to Claim 1 wherein the indicator means comprise an element gripped between opposed portions of said parts until the tension load applied to the device reaches the preset tension load of the device, when the element is then released to indicate that the preset tension load has been reached.

7. A shock absorber according to Claim 1 wherein said indicator means include a plastically deformable element arranged to be compressed on said relative movement of said parts whereby the element is permanently deformed to give a visual indication that a shock load has been applied to the safety line.

8. A shock absorber according to Claim 1 wherein two sets of said relatively movable parts are provided and one part of each set is provided by discrete portions of a body member of the shock absorber.

9. A shock absorber according to Claim 8 wherein the body member is elongate with one relatively movable part slidably engaged with each opposite end portion of the body member.

10. A shock absorber according to Claim 9 wherein said one relatively movable part at each end of the body member comprises a tubular first member slidably, but non-rotatably mounted with respect to the body member, and a second member screw-threadably received within the first member, the screw-threads of the parts of first and second members at respective opposite ends of the body member being of the opposite hand, whereby initial tensioning of the line can be achieved by rotating said body member about its longitudinal axis.

11. A turnbuckle incorporating tension load indicating means, comprising an elongate, tubular body member and, at each end thereof, a tubular first member slidably, but non-rotatably, mounted on the tubular body member, a second member screw-threadably received within said tubular first member, resilient means (36, 45) acting between said tubular first member and the tubular body member to oppose relative movement thereof in one direction when a tension loading is applied across the turnbuckle, adjustable setting means (38 ; 46, 42, 43) for applying an initial selected degree of compression loading to the resilient means (36, 45) for presetting the tension load required to be applied to the turnbuckle to effect relative movement of said tubular first member and said tubular body member in said one direction, and indicator means (39 ; 19, 44) responsive to said relative movement of said tubular first member and said tubular body member to provide an indication of when said tension loading applied to the turnbuckle, in use, reaches said preset tension load, wherein the screw-threads of the pairs of said tubular first member and second member at respective opposite ends of the tubular body member are of the opposite hand whereby tensioning of a line associated with the turnbuckle can be achieved by rotating said tubular body member about its longitudinal axis.

**Patentansprüche**

1. Stoßdämpfer, der das Erreichen einer für die Montage eines Sicherheitsseils bzw. -kabels festgelegten anfänglichen zulässigen Spannung anzeigt, so daß die Endbefestigungen desselben an einem feststehenden Bauteil nicht überlastet werden, umfassend zwei relativ zueinander bewegliche Teile (30, 35), Federelemente (36, 45), die zwischen den relativ zueinander beweglichen Teilen wirksam sind und deren Relativbewegung in einer Richtung entgegenwirken, in der eine axiale Expansion des Stoßdämpfers bewirkt wird, wenn dieser vom Sicherheitsseil mit einer Zugspannung beaufschlagt wird, verstellbare Stellelemente (38 ; 46, 42, 43), die die Federelemente (36, 45) mit einer anfänglichen Kompressionskraft beaufschlagen zwecks Voreinstellung der Zugspannung, die auf den Stoßdämpfer auszuüben ist, um eine Relativbewegung der beiden relativ zueinander beweglichen Teile (30, 35) in der genannten Richtung zu bewirken, und Anzeigemittel (39 ; 18, 44), die aufgrund der Relativbewegung der beiden relativ zueinander beweglichen Teile (30, 35) anzeigen, wenn die anfängliche zulässige Spannung an das Sicherheitsseil angelegt worden ist, wobei der Stoßdämpfer nach dem Betätigen der Anzeigemittel ein vorbestimmtes Ausmaß der Relativbewegung der Federelemente (36, 45) zuläßt, und die Federelemente (36, 45) der Relativbewegung der beiden relativ zueinander beweglichen Teile (30, 35) einen schrittweise wachsenden Widerstand entgegensetzen, um bei Benützung des Sicherheitsseils angelegte Stoßbelastungen zu dämpfen.

2. Stoßdämpfer nach Anspruch 1, wobei die Federelemente eine oder mehrere Tellerfedern umfassen, die vorbestimmte Belastungs-/Biegekennlinien haben.

3. Stoßdämpfer nach Anspruch 1, wobei die Voreinstellelemente umfassen : ein an jedem der beiden relativ zueinander beweglichen Teile vorgesehenes Widerlager, zwischen denen die Federelemente wirksam sind, sowie ein manuell einstellbares Element an einem der Teile zum Bewegen dieses Teils relativ zum anderen Teil unter Beaufschlagung der Federelemente mit einer ausgewählten Kompressionskraft, wie oben ausgeführt.

4. Stoßdämpfer nach Anspruch 1, wobei die Voreinstellelemente umfassen : ein an jedem der beiden relativ zueinander beweglichen Teile vorgesehenes Widerlager, zwischen denen die Federelemente wirksam sind, wobei das Widerlager an einem Teil durch ein bewegliches Element an diesem Teil gebildet ist und die Lage des Elements einstellbar ist, um das Einstellen einer erforderlichen anfänglichen Kompressionskraft der Federelemente zu gestatten.

5. Stoßdämpfer nach Anspruch 3, wobei das Element ein Gewindeelement ist, das auf einem Gewindeabschnitt des ihm zugeordneten Teils festgelegt ist.

6. Stoßdampfer nach Anspruch 1, wobei die Anzeigemittel ein Element umfassen, das zwischen entgegengesetzten Abschnitten der Teile gegriffen wird, bis die auf die Vorrichtung ausgeübte Zugspannung die voreingestellte Zugspannung der Vorrichtung erreicht, woraufhin das Element freigegeben wird und das Erreichen der voreingestellten Zugspannung anzeigt.

7. Stoßdämpfer nach Anspruch 1, wobei die Anzeigemittel ein plastisch verformbares Element umfassen, das so angeordnet ist, daß es bei der Relativbewegung der Teile zusammengedrückt wird, wodurch das Element bleibend verformt wird und eine Sichtanzeige liefert, daß das Sicherheitsseil mit einer Stoßbelastung beaufschlagt worden ist.

8. Stoßdämpfer nach Anspruch 1, wobei zwei Gruppen der relativ zueinander beweglichen Teile vorgesehen sind und ein Teil jeder Gruppe durch getrennte Abschnitte eines Gehäuseteils des Stoßdämpfers gebildet ist.

9. Stoßdämpfer nach Anspruch 8, wobei das Gehäuseteil länglich ist und ein relativ bewegliches Teil mit jedem entgegengesetzten Endabschnitt des Gehäuseteils in Gleitverbindung steht.

10. Stoßdämpfer nach Anspruch 9, wobei das eine relativ bewegliche Teil an jedem Ende des Gehäuseteils aufweist : ein rohrförmiges erstes Element, das verschiebbar, aber unverdrehbar in bezug auf das Gehäuseteils befestigt ist, sowie ein durch Schraubverbindung im ersten Element aufgenommenes zweites Element, wobei die Gewinde der Abschnitte des ersten und zweiten Elements an entsprechenden entgegengesetzten Enden des Gehäuseteils gegenläufig sind, wodurch das anfängliche Spannen des Seils durch Drehen des Gehäuseteils um seine Längsachse erreichbar ist.

11. Spannschloß mit Zugspannungsanzeigemitteln, umfassend ein längliches, rohrförmiges Gehäuseteil und an jedem Ende desselben ein rohrförmiges erstes Element, das verschiebbar, aber unverdrehbar auf dem rohrförmigen Gehäuseteil befestigt ist, ein durch Schraubverbindung im rohrförmigen ersten Element aufgenommenes zweites Element, Federelemente (36, 45), die zwischen dem rohrförmigen ersten Element und dem rohrförmigen Gehäuseteil wirksam sind und deren Relativbewegung in einer Richtung entgegenwirken, wenn das Spannschloß mit einer Zugspannung beaufschlagt wird, verstellbare Stellelemente (38 ; 46, 42, 43), die die Federelemente (36, 45) mit einer anfänglichen ausgewählten Kompressionskraft beaufschlagen zwecks Voreinstellung der Zugkraft, die auf das Spannschloß auszuüben ist, um eine Relativbewegung des rohrförmigen ersten Elements und des rohrförmigen Gehäuseteils in der einen Richtung zu bewirken, und Anzeigemittel (39 ; 19, 44), die aufgrund der Relativbewegung des rohrförmigen ersten Elements und des rohrförmigen Gehäuseteils anzeigen, wenn bei Benützung die auf das Spannschloß ausgeübte Zugspannung die voreingestellte Zugspannung erreicht, wobei die Gewinde des rohrförmigen ersten Elements und zweiten Elements an den entsprechenden entgegengesetzten Enden des rohrförmigen Gehäuseteils gegenläufig sind, wodurch Spannen eines dem Spannschloß zugeordneten Seils durch Drehen des rohrförmigen Gehäuseteils um seine Längsachse erreichbar ist.

## Revendications

1. Un amortisseur de choc adapté pour indiquer quand une tension acceptable initiale spécifiée pour l'installation d'un câble de sécurité est atteinte de façon à ce que les fixations d'extrémité de celui-ci à une structure fixe ne soient pas surchargées, comprenant deux parties relativement mobiles (30, 35), des moyens élastiques (36, 45) agissant entre les parties relativement mobiles pour opposer un mouvement relatif de celui-ci dans une direction pour effectuer une expansion axiale de l'amortisseur de choc quand une charge de tension est appliquée à celui-ci par ledit câble de sécurité, des moyens de réglage susceptibles d'être ajustés (38, 46, 42, 43) pour appliquer un degré initial de charge de compression aux moyens élastiques (36, 45) pour prérégler la charge de tension nécessaire pour être appliquée à l'amortisseur de choc pour effectuer un mouvement relatif desdites deux parties relativement mobiles (30, 35) dans ladite direction, et des moyens d'indicateur (39 ;19, 44) sensibles audit mouvement relatif des deux parties relativement mobiles (30, 35) pour fournir une indication du moment où ladite tension acceptable initiale a été appliquée au câble de sécurité, l'amortisseur de choc étant adapté pour permettre une quantité prédéterminée de mouvement relatif desdits moyens élastiques (36, 45) après que lesdits moyens d'indicateur aient été actionnés, et lesdits moyens élastiques (36, 45) étant adaptés pour fournir une résistance augmentant progressivement audit mouvement relatif des deux parties relativement mobiles (30, 35) pour amortir des charges de choc appliquées dans l'utilisation dudit câble de sécurité.

2. Un amortisseur de choc selon la revendication 1 dans lequel les moyens élastiques comprennent un, ou plus, ressort disque qui présente des caractéristiques de déflexion/charge prédéterminées.

3. Un amortisseur de choc selon la revendication 1 dans lequel les moyens de pré-réglage comprennent une butée sur chacune des deux dites parties relativement mobiles entre lesquelles les moyens élastiques agissent, et un élément réglable de façon manuelle sur une des parties pour déplacer cette partie par rapport à l'autre partie pour appliquer un degré sélectionné de charge de compression aux moyens élastiques comme mentionné ci-dessus.

4. Un amortisseur de choc selon la revendication 1 dans lequel les moyens de pré-réglage comprennent une butée sur chacune des deux dites parties relativement mobiles entre lesquelles les moyens élastiques agissent, la butée sur une partie étant pourvue par un élément mobile sur cette partie, la position de l'élément étant réglable pour permettre le réglage d'une quantité requise de compression initiale des moyens élastiques.

5. Un amortisseur de choc selon la revendication 3 dans lequel ledit élément est un élément de vis taraudé situé sur une partie de vis taraudée de la partie avec laquelle il est associé.

6. Un amortisseur de choc selon la revendication 1 dans lequel les moyens d'indicateur comprennent un élément serré entre des parties opposées desdites parties jusqu'à ce que la charge de tension appliquée au dispositif atteigne la charge de tension pré-réglée du dispositif, quand l'élément est alors relâché pour indiquer que la charge de tension prédéterminée a été atteinte.

7. Un amortisseur de choc selon la revendication 1 dans lequel lesdits moyens d'indicateur comprennent un élément susceptible d'être déformé de façon plastique arrangé pour être comprimé sur ledit mouvement relatif desdites parties de manière à ce que l'élément soit déformé de façon permanente pour donner une indication visuelle que la charge de choc a été appliquée au câble de sécurité.

8. Un amortisseur de choc selon la revendication 1 dans lequel deux jeux desdites parties relativement mobiles sont prévus et une partie de chaque jeu est prévue par portions discrètes d'un élément de corps de l'amortisseur de choc.

9. Un amortisseur de choc selon la revendication 8 dans lequel l'élément de corps est allongé avec une partie relativement mobile engagée de façon glissante sur chaque partie d'extrémité opposée de l'élément de corps.

10. Un amortisseur de choc selon la revendication 9 dans lequel une partie relativement mobile à chaque extrémité de l'élément de corps comprend un premier élément tubulaire monté de façon glissante, mais fixé de façon non tournante par rapport à l'élément de corps, et un second élément reçu par filetage de vis dans le premier élément, les filets de vis des parties des premier et second éléments à des extrémités opposées respectives de l'élément de corps étant du côté opposé, de manière à ce que la tension initiale du câble puisse être réalisée en faisant tourner ledit élément de corps sur son axe longitudinal.

11. Un manchon de serrage incorporant des moyens d'indication de charge de tension, comprenant un élément de corps tubulaire, allongé et, à chaque extrémité de celui-ci, un premier élément tubulaire de façon glissante, mais non tournant, fixé sur l'élément de corps tubulaire, un second élément reçu par filetage de vis dans ledit premier élément, des moyens élastiques (36, 45) agissant entre ledit premier élément tubulaire et l'élément de corps tubulaire pour opposer un mouvement relatif de celui-ci dans une direction quand une charge de tension est appliquée en travers du manchon de serrage, des moyens de réglage susceptibles d'être ajustés (38, 46, 42, 43) pour appliquer un degré sélectionné initial de charge de compression aux moyens élastiques (36, 45) pour pré-régler la charge de tension requise pour être appliquée au manchon de serrage pour effectuer un mouvement relatif dudit premier élément tubulaire et dudit élément de corps tubulaire dans ladite direction, et des moyens d'indicateur (39 ; 19, 44) sensibles audit mouvement relatif dudit premier élément tubulaire et dudit élément de corps tubulaire pour fournir une indication du moment où ladite charge de tension appliquée au manchon de serrage, dans l'utilisation, atteint ladite charge de tension pré-réglée, dans lequel les filets de vis des paires dudit premier élément tubulaire et du second élément à des extrémités opposées respectives de l'élément de corps tubulaire sont du côté opposé de manière à ce que la tension d'un câble associé avec le manchon de serrage puisse être obtenue en faisant tourner ledit élément de corps tubulaire sur son axe longitudinal.

FIG.1.

FIG.2.

1

FIG.3.

FIG.4.

FIG.5.

## FIG. 6.

15

## FIG. 7.

15

36

32    32

A    A

16    16

17    17

## FIG. 8.

32    32

36

16    16

36

FIG.9.

FIG.10.

FIG.11.

EP 0 212 826 B1